# EUROPEAN PATENT SPECIFICATION

(11) **EP 1 897 185 B1**
(45) Date of publication and mention of the grant of the patent: **16.03.2016**
(21) Application number: 06785677.3
(22) Date of filing: 27.06.2006
(51) Int. Cl.: H01R 43/055

(54) **TERMINAL FEEDING DEVICE FOR A TERMINATION MACHINE**
ANSCHLUSSVERSORGUNGSVORRICHTUNG FÜR EINE ANSCHLUSSMASCHINE
DISPOSITIF D' ALIMENTATION DE BORNE POUR UNE MACHINE DE RACCORDEMENT

(30) Priority: 30.06.2005 US 695476 P
(43) Date of publication of application: 12.03.2008
(73) Proprietor: TYCO Electronics Corporation, Middletown, PA 17057 (US)
(72) Inventor: SHANDERSKY, James, Thomas, Harrisburg, PA 17112 (US); MORRIS, Michael, Harrisburg, PA 17110 (US); DEMING, Neil, Edward, Lewisberry, PA 17339 (US)
(74) Representative: Johnstone, Douglas Ian
(86) International application number: PCT/US2006/025047
(87) International publication number: WO 2007/005433

(56) References cited:
- EP-A2- 0 404 350
- EP-A2- 0 887 897
- DE-A1- 10 154 405
- JP-A- 2000 138 087
- JP-A- 2001 297 849
- US-B1- 6 276 052

## Description

This invention relates to terminal crimping machines, and more specifically, to motor controlled feeder devices for terminal crimping machines.

Current terminal crimping machines use a mechanical feeder device to feed strip-carried, tape carried, or end-to-end electrical connectors/terminals to crimp tooling of an applicator. Significant time and effort is required by machine operators to make adjustments to the feed stroke and/or position of the feeder device with respect to the crimp-tooling. These adjustments must be made when a different sized terminal is to be used. Additionally, these adjustments may be required during a crimping run.

The problem to be solved with current feeder devices is that the cam and linkage mechanisms are mechanically linked to the crimping process, thus the current connector/terminal feeder devices operate at a rate relative to the rate of the crimping process. Thus rapid feeding, and the tolerance and clearance stack up associated with multiple mechanical linkage components, causes variation in the terminal placement which in turn causes variation in the crimping process and crimp performance. Consequently, in order to prevent feed problems, the operator may slow the terminal feed speed which in turn slows the production rate. EP 0 887 897 discloses a terminal applicator which includes a mechanism for reciprocally advancing and retracting a feed finger which resiliently biases a terminal strip from a first position to a second advanced position in alignment with a crimp die. An air hose sends a pneumatic signal to an air cylinder to move the feed finger via a pivot link. JP2001297849 discloses a feeder device according to the preamble of claim 1, the feeder device also comprising an electric actuator and a controller.

The solution to the problem is provided by a feeder device as defined by the appended claim 1.

The invention will now be described, by way of example, with reference to the accompanying drawings in which:
Figure 1 illustrates a perspective view of a terminal crimping machine formed in accordance with an exemplary embodiment of the present invention.
Figure 2 illustrates a perspective view of an applicator and a feeder device for the terminal crimping machine shown in Figure 1.
Figure 3 illustrates another perspective view of the applicator and the feeder device shown in Figure 2.
Figure 4 illustrates a perspective view of the feeder device for the machine shown in Figure 1 with a cover removed.
Figure 5 illustrates a cross sectional view of the applicator and the feeder device.
Figure 6 illustrates a perspective view of the applicator and the feeder device.
Figure 7 illustrates an exemplary terminal feeding member assembly for the feeder device.
Figure 8 illustrates another exemplary terminal feeding member assembly for the feeder device.
Figure 9 illustrates a perspective view of the feeder device in a retracted position.
Figure 10 illustrates a perspective view of the feeder device in an advanced position.

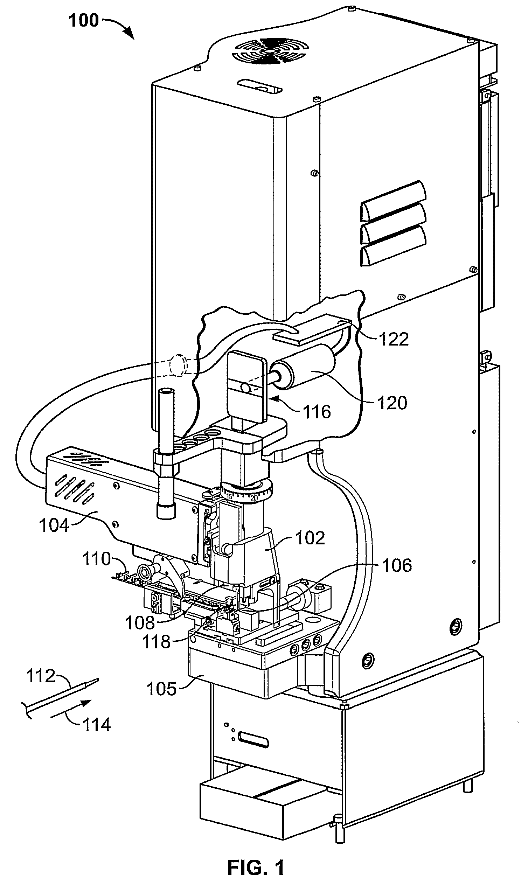

Figure 1 illustrates a perspective view of a termination machine or terminator 100 having a termination tool 102 with terminating tooling and a feeder device 104. The terminator 100 is illustrated as a terminal crimping machine used for crimping connectors to wires, however, other types of terminators 100 may be used, such as, an IDC machine, a welding machine, and the like that attach connectors to wires using processes other than crimping, or the terminator 100 may be another type of crimping machine such as a lead frame machine. The termination tool 102 is illustrated and described hereinafter as an applicator 102.

The applicator 102 is coupled to a frame 105 of the terminator 100. The applicator 102 may be removed and replaced with a different applicator, such as when the applicator 102 is worn or damaged or when an applicator having a different configuration is desired. The applicator 102 has a terminating zone or crimping zone 106 and includes crimp-tooling 108 for crimping electrical connectors or terminals 110 to an end of a wire 112 in the crimping zone 106. The feeder device 104 is positioned to feed terminals accurately to the applicator 102 and presents the terminals 110 to the crimping zone 106. Optionally, the feeder device 104 may be positioned adjacent to, or even coupled to, the applicator 102. Alternatively, the feeder device 104 may be positioned remote with respect to the applicator 102, but still delivers the terminals 110 to the crimping zone 106. The terminals 110 may be guided to the crimp zone 106 by a guide member (not shown) to ensure proper positioning of the terminals 110 within the crimping zone 106. The wires 112 are delivered to the crimping zone 106 by a wire feeder (not shown) or a bench machine (not shown) in a wire loading direction 114.

The feeder device 104 may be configured to deliver, and the applicator 102 may be configured to receive, multiple sized terminals for crimping. The feeder device 104 may be configured to deliver either side-feed terminals or end-feed terminals. Side-feed terminals are arranged side-by-side on a carrier strip and end-feed terminals are arranged successively, end-to-end. The terminator 100 is configured to receive applicators 102 for either type of terminal, namely the side-feed or the end-feed terminals. Thus a first type of applicator 102 may be configured to receive side-feed terminals and a second type of applicator 102 may be configured to receive end-feed terminals. The side-feed and end feed types of applicators 102 may be interchanged with the terminator 100. A side-feed type applicator 102 is illustrated in Figure 1.

During operation, the crimp-tooling 108 is driven through a crimp stroke by a driving mechanism 116 of the terminator 100 toward a stationary anvil 118. The crimp stroke has both a downward component and an upward component. The crimping of the terminal 110 to the wire 112 occurs during the downward component of the crimp stroke. The driving mechanism 116 is driven by a terminator actuator 120. Optionally, the terminator actuator 120 may be a motor having a drive shaft that moves driving mechanism 116. Alternatively, the terminator actuator 120 may be a linear actuator, a piezoelectric actuator, and the like. The operation of the terminator actuator 120 is controlled by a control module 122.

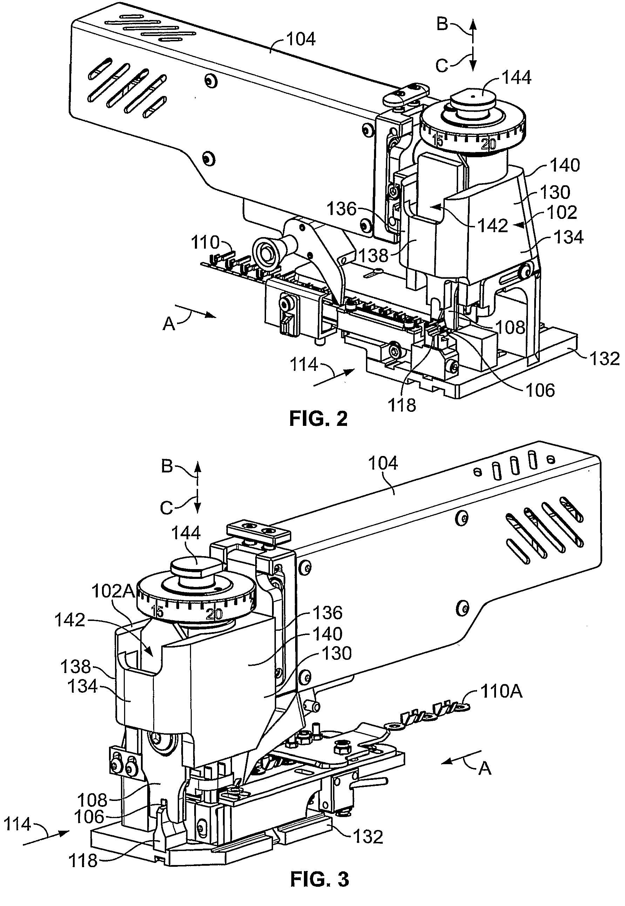

Figure 2 illustrates a perspective view of a side-feed type applicator 102 and the feeder device 104. The feeder device 104 is positioned adjacent to the applicator 102 and presents side-feed terminals 110 to the crimping zone 106 of the applicator 102. Figure 3 illustrates a perspective view of an end-feed type applicator 102A and the feeder device 104. The applicator 102A is similar to the applicator 102 shown in Figure 2. As such, like reference numerals are used to identify like features.

The applicator 102 includes a frame 130 having a base 132. The anvil 118 is coupled to the base 132. The frame 130 includes a front 134, a rear 136, a side 138, a side 140, and a central cavity 142. The feeder device 104 is positioned adjacent to the rear 136 and the terminals 110 are carried or advanced in a feed direction from the rear 136 toward the front 134, such as in the feed direction of arrow A. Optionally, the terminals 110 may be presented along the side 138. The sides 138 and 140 extend generally parallel to the feed direction of the terminals 110. A ram 144 is received within the central cavity 142 and is movable with respect to the frame 130. The crimp-tooling 108 is coupled to the ram 144 and is positioned adjacent to the side 138. The ram 144 is coupled to the driving mechanism 116 (shown in Figure 1) of the terminator 100 (shown in Figure 1). The driving mechanism 116 moves the ram 144 vertically in a lifting or reset direction, shown by arrow B, generally away from the anvil 118 and a crimping direction, shown by arrow C, generally toward the anvil 118. The feeding of the terminals 110 and the driving of the ram 144 are coordinated. For example, as the ram 144 is moved in the lifting direction, the terminals 110 are advanced in the feed direction by the feeder device 104. Optionally, the terminals 110 may also be advanced while the ram 144 is moved in the crimping direction. The terminals 110 are located in the crimping zone 106 and are stationary as the crimp-tooling nears the crimping zone 106.

Turning to Figure 3, the feeder device 104 is positioned adjacent to the applicator 102A and presents end-feed terminals 110A to the crimping zone 106 of the applicator 102A. The end-feed terminals are stacked end-to-end and fed to a central portion of the rear 136 of the applicator 102A, generally equidistant from the sides 138 and 140. The crimp-tooling 108 is also centrally located between the sides 138 and 140.

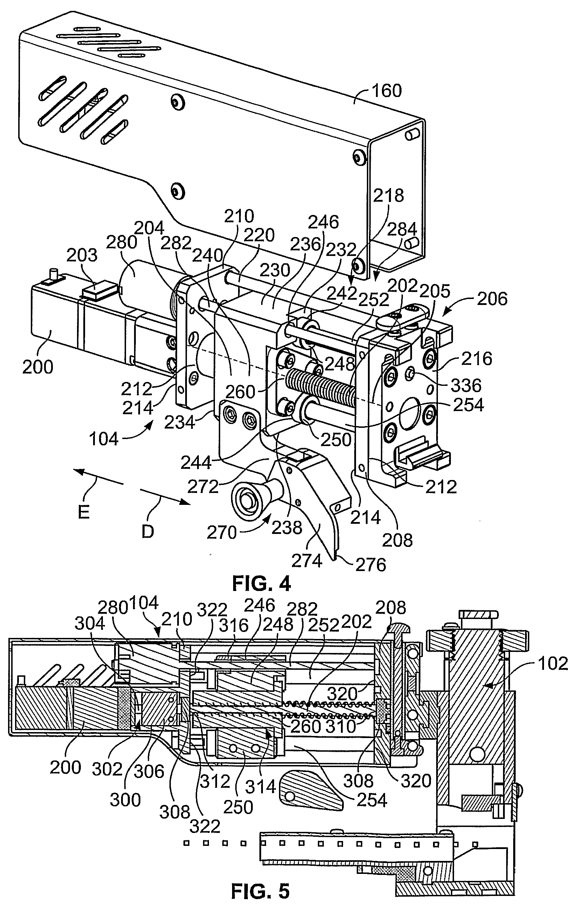

Figure 4 illustrates a perspective view of the feeder device 104 with a cover 160 removed. The feeder device 104 may be separately provided from the applicator 102 (shown in Figures 1-3) and removably coupled to the applicator 102. Optionally, the feeder device 104 may be permanently coupled to the applicator 102. Alternatively, the feeder device 104 may be coupled to a portion of the frame 105 (shown in Figure 1) of the terminator 100 (shown in Figure 1).

The feeder device 104 includes a feeder actuator 200 joined to a lead screw 202 and a feeder carriage 204 also coupled to the lead screw 202. Alternatively, the feeder device 104 may include a ball screw or another type of driving mechanism in place of the lead screw 202. In the illustrated embodiment, the feeder actuator 200 is a servo motor. Alternatively, the feeder actuator 200 may be a stepper motor, or another type of actuator such as, for example, a linear actuator, a piezoelectric actuator or motor, and the like. The feeder actuator 200 includes a controller 203 for controlling the operation of the feeder actuator 200. The controller 203 may communicate with the control module 122 (shown in Figure 1) to coordinate the operation of the feeder actuator 200 with the operation of the driving mechanism 116 (shown in Figure 1). Alternatively, the feeder actuator 200 may be joined to the control module 122 of the terminator 100 for controlling the operation of the feeder actuator 200.

During operation, the feeder actuator 200 rotates the lead screw 202 about an axis of rotation 205, and the rotational motion of the lead screw 202 is transferred to linear motion of the feeder carriage 204. For example, the feeder carriage 204 is moveable linearly between an advanced position, wherein the feeder carriage 204 is moved to a preset position in the direction of arrow D, and a retracted position, wherein the feeder carriage 204 is moved to a preset position in the direction of arrow E. In the advanced position, the terminals 110 are positioned in the crimping zone 106. In the retracted position, the feeder device 104 engages a new terminal for advancement. The feeder actuator 200 rotates the lead screw 202 in both a forward driving direction and a rearward driving direction. Optionally, in the forward driving direction, the feeder actuator 200 rotates the lead screw 202 in a clockwise direction, and in the rearward driving direction the feeder actuator 200 rotates the lead screw 202 in a counter-clockwise direction. Alternatively, in the forward driving direction, the feeder actuator 200 rotates the lead screw 202 in a counter-clockwise direction, and in the rearward driving direction the feeder actuator 200 rotates the lead screw 202 in a clockwise direction. When the lead screw 202 is operated in the forward driving direction, the feeder carriage 204 is moved in the direction of the advanced position. When the lead screw 202 is operated in the rearward driving direction, the feeder carriage 204 is moved in the direction of the retracted position. The amount of rotation of the lead screw 202 is controlled and may be programmable based on the particular application for the terminator 100, such as, for example, the size of the terminals 110 (shown in Figure 1) or the spacing of the terminals 110. Optionally, the feeder device 104 may include a belt drive or a gear drive coupled between the feeder actuator 200 and the lead screw 202. In an alternative embodiment, the feeder carriage 204 may be rotated by the feeder actuator 200 to advance the terminals 110 to the crimping zone 106.

In an exemplary embodiment, the feeder device 104 includes a frame 206 having a front support plate 208 and a rear support plate 210. The front and rear support plates 208 and 210 are planar and extend parallel to one another. Each support plate 208 and 210 includes a front surface 212 and a rear surface 214. The rear support plate 210 supports the feeder actuator 200, and the feeder actuator 200 is positioned along a portion of the rear surface 214 of the rear support plate 210. The front support plate 208 supports a mounting bracket 216, and the mounting bracket 216 is positioned along the front surface 212 of the front support plate 208. The rear surface 214 of the front support plate 208 and the front surface of the rear support plate 210 face one another and are separated by a distance such that a gap 218 exists between the front and rear support plates 208 and 210. The lead screw 202 and the feeder carriage 204 are received in the gap 218. Optionally, the frame 206 includes a tube 220 extending between the front and rear support plates 208 and 210. The tube 220 may support the front and rear support plates 208 and 210 and maintain the spacing between the front and rear support plates 208 and 210. The tube 220 may also carry wires between the front and rear support plates 208 and 210, as will be described in more detail below.

The feeder carriage 204 includes a body 230 having a front end 232, a rear end 234, a top end 236, a bottom end 238, and sides 240 extending between each of the ends. Optionally, the feeder carriage 204 may be box-shaped. In an exemplary embodiment, the feeder carriage 204 includes a plurality of openings extending therethrough, such as an upper guide opening 242, a lower guide opening 244, a lead screw opening (not shown), and a sensor device opening 246. The openings extend generally between the front end 232 and the rear end 234 of the body 230. In one embodiment, the openings may be substantially aligned. In other embodiments, the openings may be off-set with respect to one another.

The upper guide opening 242 receives an upper bushing 248 and the lower guide opening receives a lower bushing 250. The upper bushing 248 receives an upper guide rail 252 and the lower bushing 250 receives a lower guide rail 254. The upper and lower guide rails 252 and 254 are received in the gap 218 and extend between the front and rear support plates 208 and 210. The upper and lower guide rails 252 and 254 support the feeder carriage 204 and define a path of travel for the feeder carriage 204. The upper and lower guide rails 252 and 254 support the front and rear support plates 208 and 210 and maintain the spacing between the front and rear support plates 208 and 210.

The feeder carriage 204 includes a lead screw nut 260 secured thereto. Optionally, the lead screw nut 260 may be integrally formed with the feeder carriage body 230. The lead screw nut 260 is aligned with the lead screw opening and threadably engages the lead screw 202. Rotational motion of the lead screw 202 is transferred to linear motion of the feeder carriage 204 by the threaded relationship between the lead screw 202 and the lead screw nut 260.

A feeding member assembly 270 is coupled to the feeder carriage 204 and carried by the feeder carriage 204 between the advanced position and the retracted position. The feeding member assembly 270 includes a mounting block 272 that is removably coupled to the side of the body 230 at the bottom end 238. Optionally, the mounting block 272 may be coupled directly to the bottom end 238 and may be substantially centered with respect to the sides 240 of the body 230. Alternatively, the mounting block 272 may be substantially centered with respect to the body 230. The feeding member assembly 270 also includes a terminal feeding member 274 removably coupled to the mounting block 272. The terminal feeding member 274 includes a tip 276 configured to engage the terminals 110 or the carrier strip for the terminals 110.

Optionally, the feeder device 104 may include a sensor device 280 for determining the linear position of the feeder carriage 204. The sensor device includes a sensor arm 282 extending within the gap 218 and positioned adjacent to the feeder carriage to determine the relative position of the feeder carriage 204 with respect to the feeder actuator 200. Optionally, the sensor arm 282 extends through the sensor device opening 246 of the body 230. The feeder carriage 204 is moveable along the sensor arm 282, and a signal representing the position of the feeder carriage 204 is transmitted to either the controller 203 for the feeder actuator 200 or to the control module 122 for the terminal crimping machine 100. The sensor device 280 thus provides feedback to the controller 203 for controlling the position of the feeder carriage 204. Alternatively, other types of sensor devices may be used to provide feedback to the controller 203 relating to the position of the feeder carriage 204, such as, for example, an optical sensing device, or other types of linear position sensors. As such, a closed loop feedback may be provided to the feeder device 104.

The cover 160 extends over the components of the feeder device 104 such as the feeder actuator 200 and the feeder carriage 204. Optionally, the cover 160 may be coupled to the front and rear support plates 208 and 210. The cover 160 includes a slot 284 in a bottom portion of the cover 160 to allow for linear movement of the feeder carriage 204. For example, the feeding member assembly 270 extends below the cover 160 and is accessible from outside of the cover 160. The feeding member assembly 270 moves along the slot 284 during operation of the feeder device 104. Optionally, other components of the feeder device 104 may be exposed outside the cover 160, such as the feeder actuator 200.

Figure 5 illustrates a cross sectional view of the applicator 102 and the feeder device 104 taken generally along a plane extending through the sensor arm 282 shown in Figure 4. The front and rear support plates 208 and 210 support the various components of the feeder device 104. For example, the rear support plate 210 supports the feeder actuator 200. The rear support plate 210 includes a housing portion 300 defining a cavity 302. A shaft portion 304 of the feeder actuator 200 is received in the cavity 302. A coupler 306 is also received in the cavity 302 and directly couples the shaft portion 304 to the lead screw 202. Alternatively, an intervening linkage may be provided between the shaft portion 304 and the lead screw 202, such as gears. Bearings 308 are provided between the lead screw 202 and each of the front and rear support plates 208 and 210 to facilitate rotation of the lead screw 202. The bearings 308 are positioned proximate a forward end 310 and a rearward end 312 of the lead screw 202. Alternatively, bushings may be used in place of bearings 308. Figure 5 also illustrates the lead screw 202 extending through the lead screw opening, described above and now shown generally at 314. The lead screw nut 260 extends through the lead screw opening 314.

The sensor device 280 is also illustrated as being supported by each of the front and rear support plates 208 and 210. The sensor arm 282 extends through the sensor device opening 246 in the body 230 of the feeder carriage 204 and interacts with a sensor 316 also received within the sensor device opening 246.

The upper and lower guide rails 252 and 254 are supported by each of the front and rear support plates 208 and 210. Each guide rail 252 and 254 extends between a forward end 320 engaging the front support plate 208 and a rearward end 322 engaging the rear support plate 210. Optionally, the upper and lower guide rails 252 and 254 may be secured to the front and rear support plates 208 and 210 by fasteners such as screws. The upper and lower guide rails 252 and 254 also extend through the upper and lower bushings 248 and 250, respectively. The upper and lower bushings 248 and 250 slide along the upper and lower guide rails 252 and 254 during movement of the feeder carriage 104.

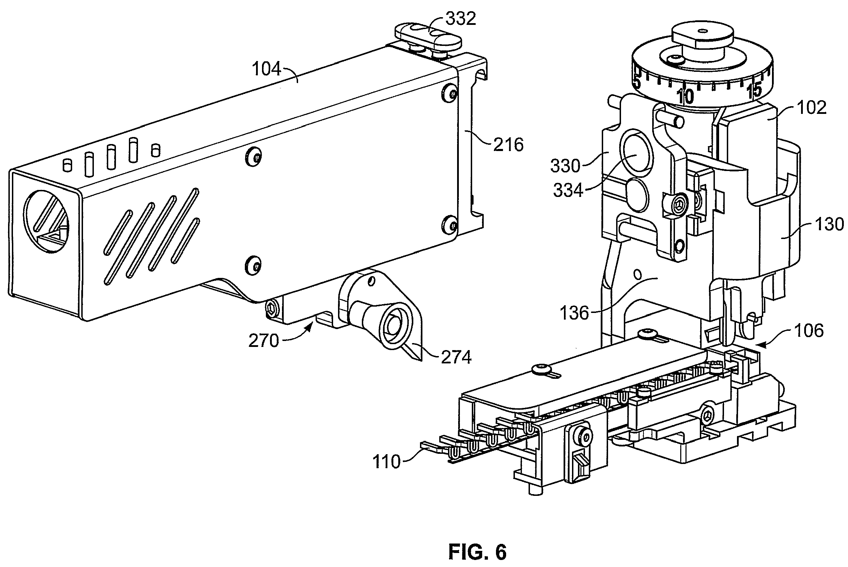

Figure 6 illustrates a perspective view of the applicator 102 and the feeder device 104. The applicator 102 includes a mounting bracket 330 coupled to the rear 136 of the frame 130. During assembly, the mounting bracket 216 of the feeder device 104 is removably coupled to the mounting bracket 330 of the applicator 102. The applicator 102 thus supports the feeder device 104 generally above the terminals 110 such that the terminal feeding member 274 of the feeding member assembly 270 may engage the terminals 110 or the carrier strip for the terminals 110. Alternatively, the feeder device 104 may be coupled to another portion of the terminator 100 (shown in Figure 1) such that applicators 102 may be interchanged in the terminator 100 without moving the feeder device 104. Optionally, the feeder device 104 includes a release 332 to release or detach the feeder device 104 from the applicator 102 or the terminator 100. The cost of the applicator 102, and thus the terminator 100, may be reduced because a single feeder device 104 may be interchangeable with various applicators 102.

According to the invention, the applicator 102 includes a memory device 334 coupled to the mounting bracket 330. The memory device 334 may include information, such as feeding parameters based on the type of applicator 102, relating to a feed stroke for the feeder device 104. The feeder device 104 may be configured to read the information from the memory device 334, or the information may be otherwise transmitted or transferred to the feeder device 104 to control the feed stroke and properly position the terminals 110 within the crimping zone 106. According to the invention, the feeder device 104 includes a reader/writer device 336 (shown in Figure 4) that reads the information from the memory device 334. The memory device 334 transmits the information to controller 203 via a wire (not shown) running through tube 220 (shown in Figure 4). The feeder device 104 may automatically adjust the feed stroke without a user's adjustment based on the information. In one embodiment, the memory device 334 is a RAM-type memory device that is readable and writable by the controller 203. Alternatively, the memory device may be a radio frequency identification tag.

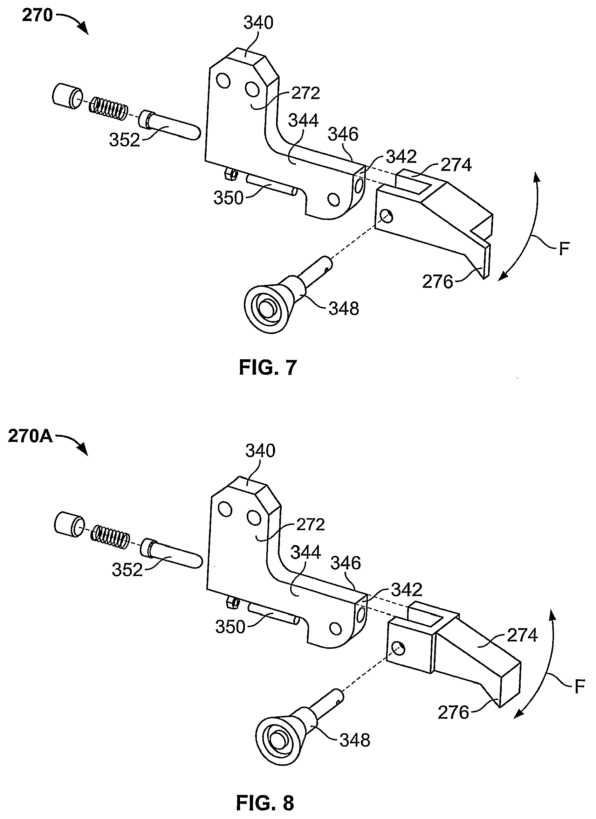

Figure 7 illustrates the feeding member assembly 270 for the feeder device 104 (shown in Figures 1-6). The mounting block 272 extends between a mounting end 340 and a mating end 342 and includes opposed side surfaces 344 and 346. The mounting end 340 is configured to be attached to the feeder carriage 204 (shown in Figure 4) as described above. The terminal feeding member 274 is removably coupled to the mating end 342 of the mounting block 272. Optionally, a fastener 348 is used to couple the terminal feeding member 274 to the mounting block 272. The fastener 348 may be removed to remove the terminal feeding member 274 from the mounting block 272. In an exemplary embodiment, the terminal feeding member 274 is rotatably coupled to the mounting block 272 and the terminal feeding member 274 rotates generally in the direction of arrow F. Optionally, the feeding member assembly 270 may include a stopper 350 to limit a range of motion of the terminal feeding member 274. The feeding member assembly 270 may also include a pusher 352 that biases the terminal feeding member 274 in the direction of the stopper 350. For example, in one embodiment, the pusher 352 is spring loaded against the terminal feeding member 274.

The terminal feeding member 274 illustrated in Figure 7 is utilized in a side-feed type applicator 102, such as the applicator 102 shown in Figure 2. The side-feed type applicator accepts terminals 110 (shown in Figure 1) on a carrier strip. The tip 276 of the side-feed type terminal feeding member 274 is sized and shaped to fit into holes provided in the carrier strip for the terminals 110. The tip 276 is also positioned at an edge of the terminal feeding member 274.

Figure 8 illustrates another feeding member assembly 270A for the feeder device 104. The feeding member assembly 270A is similar to the feeding member assembly 270 shown in Figure 7, and as such, like reference numerals will be used to identify like features. The terminal feeding member 274 is removably coupled to the mounting block 272. Optionally, a fastener 348 is used to couple the terminal feeding member 274 to the mounting block 272. The terminal feeding member 274 illustrated in Figure 8 is utilized in an end-feed type applicator 102, such as the applicator 102A shown in Figure 3. The end-feed type applicator accepts terminals 110A (shown in Figure 3) arranged end-to-end. The tip 276 of the end-feed type terminal feeding member 274 is sized and shaped to engage an upwardly projecting portion of the terminals 110A.

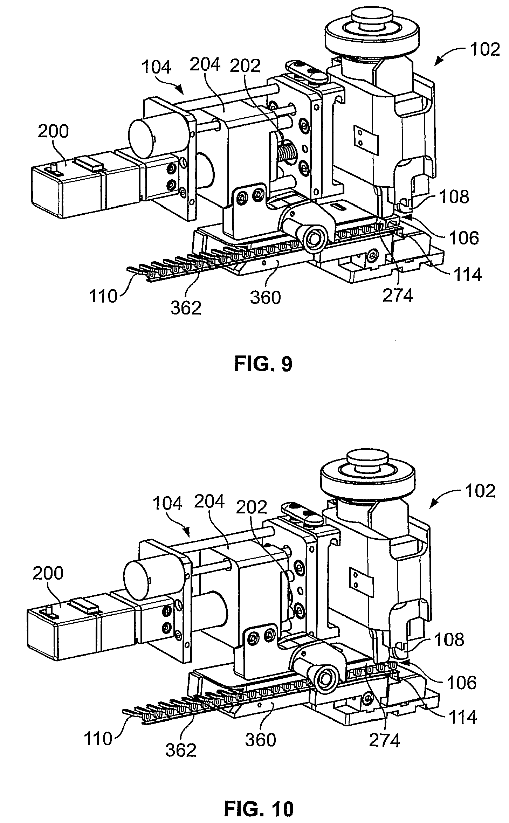

The operation of the terminator 100 will be discussed with reference to Figures 9 and 10. Figure 9 illustrates a perspective view of the feeder device 104 in a retracted position. Figure 10 illustrates a perspective view of the feeder device 104 in an advanced position. In each of Figures 9 and 10, the cover 160 (shown in Figure 4) of the feeder device 104 has been removed for clarity.

In operation, the terminals 110 are supplied to a base 360 from a reel (not shown). The base 360 is positioned adjacent to the applicator 102 and generally below the feeder device 104. Optionally, a drag bar (not shown) may be used to securely position the terminals 110 with respect to the base 360 and to hold the terminals in tension to resist forward motion of the terminals toward the crimping zone 106. The terminals 110 may be side-feed terminals or end-feed terminals depending on the particular application. Figures 9 and 10 illustrate side-feed terminals having a carrier strip.

As illustrated in Figure 9, the terminals 110 and the feeder device 104 are in a retracted position. In the retracted position, no terminal is located within the crimping zone 106 of the applicator 102. Additionally, in the retracted position, the terminal feeding member 274 of the feeder device 104 engages a hole 362 of the carrier strip. The terminal feeding member 274 is biased downward into the hole by the pusher 352 (shown in Figure 7). Additionally, the terminal feeding member 274 maintains engagement with the carrier strip during the feeding stroke via the pusher 352.

In operation, the feeder device 104 transfers the terminals 110 to the advanced position, shown in Figure 10, wherein one of the terminals 110 is positioned in the crimping zone 106 directly between the anvil 118 and the crimp tooling 108. The feeder device 104 transfers the terminals 110 independently of the operation of the applicator 102. For example, the feeder actuator 200 is operated and rotates the lead screw 202 in the forward driving direction for a predetermined amount of time or a predetermined amount of revolutions. The rotation of the lead screw 202 transfers the feeder carriage 204 a corresponding predetermined distance from the retracted position to the advanced position. The feeder actuator 200 then rotates the lead screw 202 in the rearward driving direction for a predetermined amount of time or a predetermined amount of revolutions. The rotation of the lead screw 202 transfers the feeder carriage 204 a corresponding predetermined distance from the advanced position to the retracted position.

In an exemplary embodiment, a feed stroke of the feeder device 104 is accomplished independently of a crimping stroke of the applicator 102. A feed stroke is defined as the transfer of the feeder carriage 204 from the retracted position, to the advanced position, and back to the retracted position. A crimping stroke is defined as the transfer of the crimp tooling 108 from a retracted position, to a crimp position, and back to the retracted position. In one embodiment, the feeder device 204 may advance multiple terminals to the crimping zone 106 during a single feed stroke, wherein one terminal is presented to the crimp zone 106 during each crimp stroke. The applicator 102 thus may have multiple crimp strokes for each feed stroke.

Optionally, the feeder actuator 200 may control the position of the feeder carriage 204 at any given time. The position of the feeder carriage 204 over time defines a motion profile of the feeder carriage 204, and the feeder actuator 200 controls the motion profile. The motion profile may be controlled by defining a starting position of the feeder carriage 204, controlling a stopping position of the feeder carriage 204, controlling a speed of the feeder carriage 204, controlling an acceleration or deceleration of the feeder carriage 204, and the like. These variables may be adjusted or altered during the feed stroke to provide a controlled motion profile and a more consistent feed position. For example, the speed of the feeder carriage 204 may be slowed near the limits of the range of motion of the feeder carriage 204. The feeder carriage 204 may thus have controlled acceleration from, and controlled deceleration toward, the retracted position and/or the advanced position. The feeder carriage 204 may have a different speed during the advancing portion of the feed stroke than the retracting portion of the feed stroke. The speed may be varied by varying the speed of the feeder actuator 200 and the speed of rotation of the lead screw 202. Additionally, the speed of the feeder carriage 204 may be varied independently of a crimping stroke of the applicator. For example, the crimp stroke of the applicator 102 may have a constant speed, but the speed of the feed stroke of the feeder carriage 204 may be varied. As such, the feed stroke is operated independently of the crimp stroke. Additionally, as indicated above, the motion profile may include multiple stopping positions along the feed stroke such that multiple terminals 110 may be feed to the termination zone 106 during a single feed stroke. The acceleration from and deceleration to each stopping position may be controlled.

According to the invention, the feed stroke is programmable and controlled by controller 203. For example, the retracted position and the advanced position may be determined and/or adjusted based on inputs to the controller 203, such as by pushing advance or retract buttons on a computer or dials on the feeder device 104 or terminator 100. Manual or mechanical adjustments by a user to linkages between the applicator 102 and feeder device 104 are not required. Set up time and down time are thus reduced. Additionally, the retracted position and the advanced position may be determined based on the type of applicator 102 used. For example, the memory device 334 (shown in Figure 6) may provide information to the controller to define the advanced and retracted positions of the feeder carriage 204.

Optionally, a monitoring system (not shown) may be provided to provide feedback to the controller relating to the position of the terminals with respect to the crimping zone to automatically adjust the feed stroke. For example, a camera (not shown) or optical sensing device may be provided to determine the advanced and/or retracted positions. Adjustments to the advanced or retracted positions may be made based on inputs from the camera. As such, a closed loop feedback may be provided to the feeder device 104.

A terminator 100 is thus provided having a feeder actuator 200 controlled feeder device 104 that reduces setup time since the feed stroke and the terminal position may be programmable. Thus, unlike current systems that require the operator to use tools and adjusting linkage, the operator simply pushes advance or retract buttons on the feed device to change the stroke or position. Secondly, the cost of the overall crimping system may be reduced because each terminator 100 will require only one feeder device 104 since the feeder device 104 is removable from the applicator 102. Additionally, since no linkage mechanism is required on the applicator 102, the cost of an applicator is reduced. Finally, the feeder device provides flexibility in the rate and final position of terminal feeding to improve crimp quality. The feeder actuator 200 is programmed to provide a slow and controlled acceleration and deceleration profile thereby providing more consistent feed position.

While the invention has been described in terms of various specific embodiments, those skilled in the art will recognize that the invention can be practiced with modification within the scope of the claims.

## Claims

1. A feeder device (104) configured to be used with a termination machine (100) having a termination tool (102), the device comprising:
a frame (206) configured to be located proximate to a termination zone (106) of the termination tool;
a feeder carriage (204) mounted to the frame, the feeder carriage being movable in a terminal feeding direction to an advanced position; and
**characterized by**:
an electric actuator (200) mounted to the frame and joined to the feeder carriage, the actuator driving the feeder carriage in the terminal feeding direction to the advanced position to locate a terminal (110) at the termination zone, wherein the actuator (200) controls motion profiles which define a starting position, a stopping position, a speed, and an acceleration or deacceleration of the feeder carriage;
a controller (203), wherein the controller is programmable to control the operation of the actuator (200); and
a mounting bracket (216) for removably coupling the feeder device (104) to a mounting bracket (330) of the termination tool (102), wherein the mounting bracket (216) of the feeder device (104) comprises a reader device (336) configured to read information defining advanced and retracted positions of the feeder carriage (204) from a memory device (334) that is coupled to the mounting bracket (330) of the termination tool (102), and transmit the information to the controller.

2. The feeder device (104) of claim 1, further comprising a terminal feeding member (270) configured to engage one of a terminal (110) and a carrier strip for a terminal, the terminal feeding member being carried by the feeder carriage (204), and the terminal feeding member being configured to advance the terminals toward the termination zone (106) as the feeder carriage is moved in the terminal feeding direction.

3. The feeder device (104) of claim 1, further comprising a lead screw (202) coupled to the actuator (200), the feeder carriage (204) threadably coupled to the lead screw such that, as the actuator rotates the lead screw, the feeder carriage moves linearly along the terminal feeding direction.

4. The feeder device (104) of claim 1, further comprising:
a controller (203) for controlling an operation of the electric actuator (200); and
a sensor (316) for determining a position of the feeder carriage, wherein the controller operates the electric actuator based on the position of the feeder carriage (204).

5. A termination system (100) comprising:
a termination tool (102) having termination tooling (108) configured to terminate a terminal (110) to a wire (112) in a termination zone (106), the termination tool (102) comprising a mounting bracket (330) for removably coupling a feeder device (104) to the mounting bracket (330), wherein a memory device (334) is coupled to the mounting bracket (330); and
the feeder device (104) of claim 1.

6. The termination system (100) of claim 5, further comprising a terminal feeding member (270) configured to engage one of a terminal (100) and a carrier strip for a terminal, the terminal feeding member being carried by the feeder carriage (204) and being configured to advance the terminals toward the termination zone (106) as the feeder carriage is moved in the terminal feeding direction.

7. The termination system (100) of claim 5, wherein the feeder device (104) is removably coupled to the termination tool (102).

8. The termination system (100) of claim 5, the termination tooling (108) moveable along a termination stroke, the feeder device (104) configured to successively feed terminals (110) to the termination zone (106) synchronously with the termination stroke.

9. The termination system (100) of claim 5, further comprising a control module (122) operatively coupled to the termination tool (102) and the feeder device (104), the control module configured to operate the termination tool in a termination operation and the control module configured to operate the feeder device in a feeding operation, wherein the control module coordinates the termination operation and the feeding operation.

## Patentansprüche

1. Zuführungsvorrichtung (104), konfiguriert für den Einsatz mit einer Abschlussmaschine (100) mit einem Abschlusswerkzeug (102), wobei die Vorrichtung Folgendes umfasst:
einen Rahmen (206), so konfiguriert, dass er in der Nähe einer Abschlusszone (106) des Abschlusswerkzeugs positioniert werden kann;
einen am Rahmen montierten Zuführungsschlitten (204), der in einer Klemmenzuführungsrichtung zu einer vorderen Position bewegt werden kann; und
**gekennzeichnet durch**:
einen Elektroantrieb (200), der am Rahmen montiert und mit dem Zuführungsschlitten gekoppelt ist, wobei der Antrieb den Zuführungsschlitten in der Klemmenzuführungsrichtung in die vordere Position antreibt, um eine Klemme (110) in der Abschlusszone zu positionieren, wobei der Antrieb (200) Bewegungsprofile steuert, die eine Startposition, eine Stoppposition, eine Geschwindigkeit und eine Beschleunigung oder Verlangsamung des Zuführungsschlittens definieren;
einen Controller (203), wobei der Controller zum Steuern des Betriebs des Antriebs (200) programmiert werden kann; und
eine Befestigung (216) zum entfernbaren Koppeln der Zuführungsvorrichtung (104) an einer Befestigung (330) des Abschlusswerkzeugs (102), wobei die Befestigung (216) der Zuführungsvorrichtung (104) eine Lesevorrichtung (336) umfasst, konfiguriert zum Lesen von vordere und hintere Positionen des Zuführungsschlittens (204) definierenden Informationen aus einer Speichervorrichtung (334), die mit der Befestigung (330) des Abschlusswerkzeugs (102) gekoppelt ist, und Senden der Informationen zum Controller.

2. Zuführungsvorrichtung (104) nach Anspruch 1, die ferner ein Klemmenzuführungselement (270) umfasst, das so konfiguriert ist, dass es in eine Klemme (110) oder ein Trägerband für eine Klemme eingreift, wobei das Klemmenzuführungselement vom Zuführungsschlitten (204) getragen wird und wobei das Klemmenzuführungselement zum Vorbewegen der Klemmen zur Abschlusszone (106) hin konfiguriert ist, während der Zuführungsschlitten in der Klemmenzuführungsrichtung bewegt wird.

3. Zuführungsvorrichtung (104) nach Anspruch 1, die ferner eine mit dem Antrieb (200) gekoppelte Leitspindel (202) umfasst, wobei der Zuführungsschlitten (204) mit der Leitspindel gewindegekoppelt ist, so dass sich, wenn der Antrieb die Leitspindel dreht, der Zuführungsschlitten linear in der Klemmenzuführungsrichtung bewegt.

4. Zuführungsvorrichtung (104) nach Anspruch 1, die ferner Folgendes umfasst:
einen Controller (203) zum Steuern eines Betriebs des Elektroantriebs (200); und
einen Sensor (316) zum Bestimmen einer Position des Zuführungsschlittens, wobei der Controller den Elektroantrieb auf der Basis der Position des Zuführungsschlittens (204) betreibt.

5. Abschlusssystem (100), das Folgendes umfasst:
ein Abschlusswerkzeug (102) mit Abschlussmitteln (108), konfiguriert zum Abschließen eines Drahts (112) mit einer Klemme (110) in einer Abschlusszone (106), wobei das Abschlusswerkzeug (102) eine Befestigung (330) zum entfernbaren Koppeln einer Zuführungsvorrichtung (104) mit der Befestigung (330) umfasst, wobei eine Speichervorrichtung (334) mit der Befestigung (330) gekoppelt ist; und
die Zuführungsvorrichtung (104) nach Anspruch 1.

6. Abschlusssystem (100) nach Anspruch 5, das ferner ein Klemmenzuführungselement (270) umfasst, das zum Eingreifen in eine Klemme (100) oder ein Trägerband für eine Klemme konfiguriert ist, wobei das Klemmenzuführungselement von dem Zuführungsschlitten (204) getragen wird und zum Vorbewegen der Klemmen in Richtung der Abschlusszone (106) konfiguriert ist, während der Zuführungsschlitten in der Klemmenzuführungsrichtung bewegt wird.

7. Abschlusssystem (100) nach Anspruch 5, wobei die Zuführungsvorrichtung (104) entfernbar mit dem Abschlusswerkzeug (102) gekoppelt ist.

8. Abschlusssystem (100) nach Anspruch 5, wobei das Abschlussmittel (108) entlang einem Abschlusshub beweglich ist, wobei die Zuführungsvorrichtung (104) so konfiguriert ist, dass sie der Abschlusszone (106) sukzessiv Klemmen (110) synchron mit dem Abschlusshub zuführt.

9. Abschlusssystem (100) nach Anspruch 5, das ferner ein Steuermodul (122) umfasst, das mit dem Abschlusswerkzeug (102) und der Zuführungsvorrichtung (104) wirkgekoppelt ist, wobei das Steuermodul zum Betreiben des Abschlusswerkzeugs in einem Abschlussbetrieb konfiguriert ist und das Steuermodul zum Betreiben der Zuführungsvorrichtung in einem Zuführungsbetrieb konfiguriert ist, wobei das Steuermodul den Abschlussbetrieb und den Zuführungsbetrieb koordiniert.

## Revendications

1. Dispositif d'alimentation (104) configuré pour être utilisé avec une machine de terminaison (100) ayant un outil de terminaison (102), le dispositif comprenant :
un bâti (206) configuré pour être situé à proximité d'une zone de terminaison (106) de l'outil de terminaison ;
un chariot d'alimentation (204) monté sur le bâti, le chariot d'alimentation étant mobile dans une direction d'alimentation en cosses à une position avancée ; et
**caractérisé par** :
un actionneur électrique (200) monté sur le bâti et relié au chariot d'alimentation, l'actionneur entraînant le chariot d'alimentation dans la direction d'alimentation en cosses à la position avancée pour positionner une cosse (110) à la zone de terminaison, dans lequel l'actionneur (200) commande les profils de déplacement qui définissent une position de démarrage, une position d'arrêt, une vitesse et une accélération ou décélération du chariot d'alimentation ;
un contrôleur (203) qui est programmable pour commander le fonctionnement de l'actionneur (200) ; et
un support de montage (216) pour coupler de manière amovible le dispositif d'alimentation (104) à un support de montage (330) de l'outil de terminaison (102), le support de montage (216) du dispositif d'alimentation (104) comprenant un dispositif lecteur (336) configuré pour lire des informations définissant des positions avancée et rétractée du chariot d'alimentation (204) à partir d'un dispositif de mémoire (334) qui est couplé au support de montage (330) de l'outil de terminaison (102), et transmettre les informations au contrôleur.

2. Dispositif d'alimentation (104) selon la revendication 1, comprenant en outre un élément d'alimentation en cosses (270) configuré pour engager l'une d'une cosse (110) et d'une bande porteuse pour une cosse, l'élément d'alimentation en cosses étant porté par le chariot d'alimentation (204), et l'élément d'alimentation en cosses étant configuré pour faire avancer les cosses vers la zone de terminaison (106) tandis que le chariot d'alimentation est déplacé dans la direction d'alimentation en cosses.

3. Dispositif d'alimentation (104) selon la revendication 1, comprenant en outre une vis mère (202) couplée à l'actionneur (200), le chariot d'alimentation (204) étant couplé par filetage à la vis mère de telle sorte que, lorsque l'actionneur fait tourner la vis, le chariot d'alimentation se déplace linéairement dans la direction d'alimentation en cosses.

4. Dispositif d'alimentation (104) selon la revendication 1, comprenant en outre :
un contrôleur (203) pour commander une opération de l'actionneur électrique (200) ; et
un capteur (316) pour déterminer une position du chariot d'alimentation, dans lequel le contrôleur actionne l'actionneur électrique en fonction de la position du chariot d'alimentation (204).

5. Système de terminaison (100) comprenant :
un outil de terminaison (102) ayant un outillage de terminaison (108) configuré pour terminer une cosse (110) à un fil (112) dans une zone de terminaison (106), l'outil de terminaison (102) comprenant un support de montage (330) pour coupler de manière amovible un dispositif d'alimentation (104) au support de montage (330), dans lequel le dispositif de mémoire (334) est couplé au support de montage (330) ; et
le dispositif d'alimentation (104) selon la revendication 1.

6. Système de terminaison (100) selon la revendication 5, comprenant en outre un élément d'alimentation en cosses (270) configuré pour s'engager avec l'une des cosses (100) et une bande porteuse pour une cosse, l'élément d'alimentation en cosses étant porté par le chariot d'alimentation (204) et étant configuré pour faire avancer les cosses vers la zone de terminaison (106) tandis que le chariot d'alimentation est déplacé dans la direction d'alimentation en cosses.

7. Système de terminaison (100) selon la revendication 5, dans lequel le dispositif d'alimentation (104) est couplé de manière amovible à l'outil de terminaison (102).

8. Système de terminaison (100) selon la revendication 5, l'outillage de terminaison (108) étant mobile suivant une course de terminaison, le dispositif d'alimentation (104) étant configuré pour fournir successivement des cosses (110) à la zone de terminaison (106) de manière synchrone avec la course de terminaison.

9. Système de terminaison (100) selon la revendication 5, comprenant en outre un module de commande (122) couplé fonctionnellement à l'outil de terminaison (102) et au dispositif d'alimentation (104), le module de commande étant configuré pour actionner l'outil de terminaison dans une opération de terminaison et le module de commande étant configuré pour actionner le dispositif d'alimentation en une opération d'alimentation, dans lequel le module de commande coordonne l'opération de terminaison et l'opération d'alimentation.
